(19) Europäisches Patentamt
European Patent Office
Office européen des brevets

(11) EP 3 859 939 A1

(12) EUROPEAN PATENT APPLICATION

(43) Date of publication:
04.08.2021 Bulletin 2021/31

(51) Int Cl.:
H02J 50/12 (2016.01)
G01L 3/10 (2006.01)
H02J 50/50 (2016.01)
B62M 6/50 (2010.01)
H01F 38/18 (2006.01)

(21) Application number: 20212406.1

(22) Date of filing: 08.12.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.01.2020 JP 2020011980

(71) Applicant: SMK Corporation
Tokyo 142-8511 (JP)

(72) Inventor: YONEZAWA, Satoshi
Tokyo, 142-8511 (JP)

(74) Representative: Michalski Hüttermann & Partner
Patentanwälte mbB
Speditionstraße 21
40221 Düsseldorf (DE)

(54) WIRELESS POWER SUPPLY DEVICE

(57) There is provided a wireless power supply device capable of being assembled through an easy process of electrically connecting both ends of a power transmitting LC circuit to an electrically-conductive case that forms a resonant cavity. The wireless power supply device includes the electrically-conductive case that accommodates a power transmitting circuit board and a power receiving LC circuit in the resonant cavity formed therein and surrounded by an electrically-conductive plate with the both ends of the power transmitting LC circuit being connected to the electrically-conductive plate. In the resonant cavity, a power transmitting coil and a power receiving coil resonate magnetically so as to supply power of an AC voltage signal to a load. The both ends of the power transmitting LC circuit are electrically connected to the electrically-conductive case using a pair of electrically-conductive attachment units configured to attach the power transmitting circuit board to an inner wall surface of the electrically-conductive case. In the step of attaching the power transmitting circuit board to the electrically-conductive case, the both ends of the power transmitting LC circuit can be electrically connected to the electrically-conductive case.

FIG. 1

EP 3 859 939 A1

**Description**

Field

The present invention relates to a magnetic resonance wireless power supply device configured to supply power to a load connected to a power receiving coil by generating magnetic resonance between a power transmitting coil and the power receiving coil, and more particularly, to a wireless power supply device in which a power transmitting coil and a power receiving coil are disposed in a resonant cavity surrounded by an electrically-conductive plate in order to supply power from an AC power source to a load at a high transmission efficiency.

Background

Wireless power supply is divided broadly into an electromagnetic induction type and a magnetic resonance type. In the electromagnetic induction type, however, a power transmitting coil and a power receiving coil need to be arranged in a manner opposed to each other at a distance of several centimeters away from each other. Thus, the magnetic resonance type capable of extending its transmission distance to a range from several tens of centimeters to several meters is attracting attention. A magnetic field formed by the resonance of the power transmitting coil at a resonance frequency $f_0$, however, propagates over the entire open space around the power transmitting coil regardless of the position of the resonating power receiving coil. Thus, such propagation leads to a high energy loss, and power transmitted between the power transmitting coil and the power receiving coil has a low transmission efficiency of about 3% even when these coils are disposed close to each other within a range of one meter. As such, if it is attempted to supply a high power to a load with a distance being provided between the power transmitting coil and the power receiving coil, high-energy electromagnetic waves would be formed, thus failing to meet safety criteria set in consideration of harmful effects on the human body.

In view of this, a magnetic resonance wireless power supply device is described in Patent Literature 1 in which a power transmitting coil and a power receiving coil are arranged in a manner close to, and opposed to, each other at a distance of about several centimeters away from each other in order to improve an energy loss in wireless power supply.

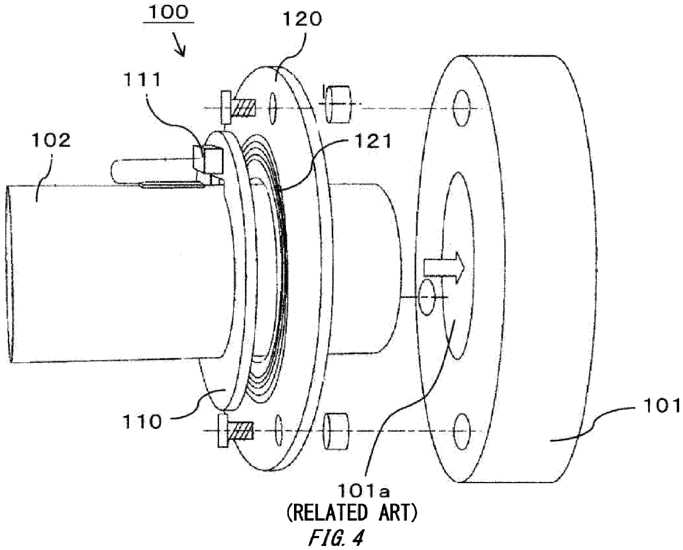

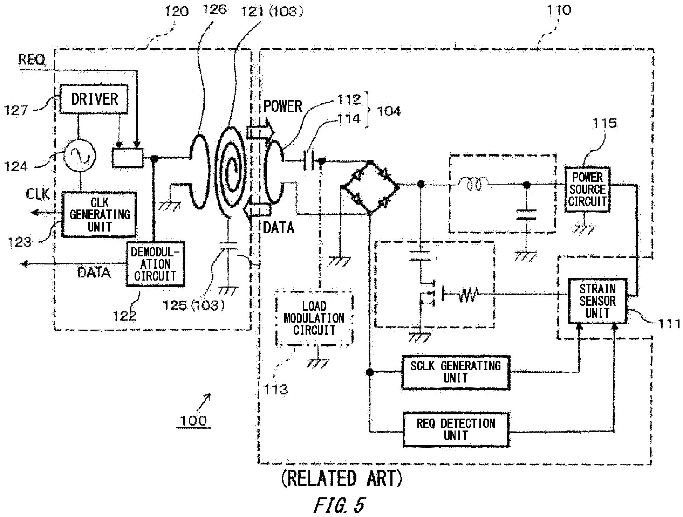

A magnetic resonance wireless power supply device 100 described in Patent Literature 1 that is included in a power-assisted bicycle will be described below with reference to Figs. 4 and 5. The wireless power supply device 100 is employed for supplying power to a torque sensor 111 attached to a crankshaft 102 (hereinafter, referred to as a movable part), which rotates together with a pedal of the power-assisted bicycle, from a main body (hereinafter, referred to as a fixed part) of the bicycle. In Fig. 4, the reference numeral 101 denotes a bottom bracket attached below a seat tube to which a battery is fixed. The bottom bracket includes a bearing 101a through which the crankshaft 102 that rotates together with the pedal is rotatably inserted.

This power-assisted bicycle estimates a running torque applied to the crankshaft 102 on the basis of a distortion detected by the torque sensor 111 attached to the movable part. On the basis of the estimated running torque, the power-assisted bicycle drives an electric motor in the fixed part to compensate for the rotation of the crankshaft 102. A power transmitting circuit board 120 fixed to the bottom bracket 101 of the fixed part by screws includes: a power transmitting LC circuit 103 in which a power transmitting coil 121 and a power transmitting capacitor 125 are connected in series; an AC power source 124 that outputs an AC voltage signal having a resonance frequency $f_0$ of the power transmitting LC circuit 103 on the basis of a clock signal generated by a CLK generating unit 123; a driver 127 that outputs the AC voltage signal to a voltage conversion coil 126 coupled with the power transmitting coil 121 by electromagnetic induction; and a demodulation circuit unit 122 that demodulates a detection value of the torque sensor 111 modulated by a load modulation circuit unit 113 in the movable part, for example.

A power receiving circuit board 110 attached to the movable part includes: a power receiving LC circuit 104 including a power receiving coil 112 and a power receiving capacitor 114 connected in series and having a resonance frequency $f_0$ the same as the resonance frequency $f_0$ of the power transmitting LC circuit 103; a power source circuit 115 connected to the power receiving LC circuit 104; the torque sensor 111; and the load modulation circuit unit 113 that outputs a detection value detected by the torque sensor 111 to the fixed part, for example.

The power receiving circuit board 110 has a disc shape and is fixed around a rotation axis of the crankshaft 102. The power transmitting circuit board 120 has a disc shape through which the crankshaft 102 is inserted, and is fixed to the bottom bracket 101 by screws so as to be opposed to the power receiving circuit board 110. With such a configuration, the power receiving coil 112 and the power transmitting coil 121 are arranged on opposed faces of the power receiving circuit board 110 and the power transmitting circuit board 120, respectively, at a distance of several centimeters away from each other around the axis of the crankshaft 102. Thus, the power receiving coil 112 and the power transmitting coil 121 magnetically resonate with a relatively low energy loss.

In the fixed part, the AC voltage signal having the resonance frequency $f_0$ is outputted to the voltage conversion coil 126 by the driver 127, thereby exciting the power transmitting coil 121, being coupled with the voltage conversion coil 126 by electromagnetic induction, at the resonance frequency $f_0$. As the result, a magnetic field having the resonance frequency $f_0$ is generated

around the power transmitting coil 121, and the power receiving coil 112 of the power receiving circuit board 110 having the same resonance frequency $f_0$ resonates in the magnetic field, thereby generating induced electromotive force across the power receiving coil 112. The induced electromotive force generated in the power receiving coil 112 is rectified, and then inputted to the power source circuit 115 as a DC voltage via a lowpass filter. In this manner, wireless power supply from the fixed part to the movable part is achieved. Using the inputted DC power source voltage, the power source circuit 115 of the movable part provides a driving power source to circuit components mounted on the power receiving circuit board 110 as well as the torque sensor 111.

The load modulation circuit unit 113 in the movable part modulates a power source current flowing through the power receiving coil 112 by the generation of the induced electromotive force with detection data detected by the torque sensor 111. The load modulation circuit unit 113 then superimposes the modulated signal over the AC voltage signal flowing through the voltage conversion coil 126 via the power transmitting coil 121 of the fixed part resonating with the power receiving coil 112, and the voltage conversion coil 126 coupled with the power transmitting coil 121 by electromagnetic induction. The demodulation circuit unit 122 connected to the voltage conversion coil 126 demodulates the detection data from the modulated signal superimposed over the AC voltage signal, and outputs the demodulated detection data to a drive control circuit (not shown) that controls operations of the electric motor.

According to such a magnetic resonance wireless power supply device 100, a power source can be provided from the main body of the bicycle equipped with the battery, or the like, to the torque sensor 111 attached to the crankshaft, which rotates relative to the main body, by the wireless power supply technology so as to drive the torque sensor 111. The magnetic resonance wireless power supply device 100 can also output the detection data detected by the torque sensor 111 wirelessly to the drive control circuit in the main body of the bicycle.

Patent Literature 2, for example, proposes a wireless power supply device that supplies power from a power transmitting coil to a power receiving coil at a high transmission efficiency with a low energy loss even when the power transmitting coil and the power receiving coil are separated by several meters. In the wireless power supply device described in Patent Literature 2, a power transmitting LC circuit in which the power transmitting coil and a power transmitting capacitor are connected in series, and a power receiving LC circuit in which the power receiving coil and a power receiving capacitor are connected in series are accommodated in a resonant cavity surrounded by an electrically-conductive plate. Circuit constants of the power transmitting LC circuit with both ends thereof being connected to the electrically-conductive plate and the power receiving LC circuit are set so that these circuits resonate at the same resonance frequency $f_0$.

As a result of the resonation of the power transmitting LC circuit and the power receiving LC circuit at the same resonance frequency $f_0$, the power receiving coil disposed in a magnetic field generated around the power transmitting coil resonates with the oscillation of the power transmitting coil, thus causing wireless power supply from the power transmitting coil to a load connected to the power receiving coil. Moreover, no standing electromagnetic waves generated around the power transmitting coil by the oscillation of the power transmitting coil leak out from the resonant cavity surrounded by the electrically-conductive plate. Thus, power can be wirelessly supplied, without an energy loss, to the load connected to the power receiving coil at a high transmission efficiency of 40% to 95%.

Citation List

Patent Literature

Patent Literature 1: Japanese Patent No. 6129992
Patent Literature 2: U.S. Patent Application Publication No. 2018/0097402

Summary

Technical Problem

The wireless power supply device 100 described in Patent Literature 1 has structural limitations since the power receiving coil 112 and the power transmitting coil 121 need to be arranged in a manner opposed to each other at a distance of several centimeters away from each other. Moreover, in order to electrically connect the AC power source to the power transmitting coil 121 disposed at a position close to the power receiving coil 112, a power cable having a certain length needs to be used for connecting therebetween.

Furthermore, since the interspace between the power receiving coil 112 and the power transmitting coil 121 is opened to the outside, the leakage of the electromagnetic waves generated by the power transmitting coil 121 and the resulting harmful effects on the human body need to be considered. In addition, limited transmission efficiency of the wireless power supply leads to accelerated exhaustion of the battery having a limited capacity.

In the wireless power supply device described in Patent Literature 2, on the other hand, both ends of the power transmitting LC circuit in which the power transmitting coil and the power transmitting capacitor are connected in series need to be electrically connected to the electrically-conductive plate surrounding the resonant cavity, thus complicating an assembly operation of placing the wireless power supply device in the resonant cavity surrounded by the electrically-conductive plate.

Moreover, the inductance of the power transmitting coil and the capacitance of the power transmitting capacitor need to be adjusted so that the power transmitting LC circuit resonates at the same frequency $f_0$ as the resonance frequency $f_0$ of the power receiving LC circuit. Such adjustment of the resonance frequency $f_0$ is an extremely difficult task.

The present invention has been made in view of the foregoing conventional problems, and it is an object of the present invention to provide a wireless power supply device capable of wirelessly supplying power to a load connected to a power receiving coil from a power transmitting coil at a high transmission efficiency, and capable of being assembled through an easy process of electrically connecting both ends of a power transmitting LC circuit to an electrically-conductive case that forms a resonant cavity.

It is another object of the present invention to provide a wireless power supply device capable of wirelessly supplying power to a load connected to a power receiving coil from a power transmitting coil at a high transmission efficiency, and capable of easily adjusting a resonance frequency $f_0$ of a power transmitting LC circuit so as to be identical with a resonance frequency $f_0$ of a power receiving LC circuit.

Solution to Problem

In order to achieve the foregoing objects, a first aspect of the present invention provides a wireless power supply device including: a power transmitting LC circuit having a power transmitting coil and a power transmitting capacitor connected in parallel or in series; a power transmitting circuit board on which the power transmitting LC circuit is formed; a power source circuit configured to apply an AC voltage signal having a resonance frequency $f_0$ of the power transmitting LC circuit to the power transmitting LC circuit; a power receiving LC circuit having a power receiving coil and a power receiving capacitor connected in parallel or in series and having a resonance frequency $f_0$ the same as the resonance frequency $f_0$ of the power transmitting LC circuit; a load to be supplied with power of the AC voltage signal via the power receiving coil of the power receiving LC circuit; and an electrically-conductive case configured to accommodate the power transmitting circuit board and the power receiving LC circuit in a resonant cavity formed therein and surrounded by an electrically-conductive plate with both ends of the power transmitting LC circuit being connected to the electrically-conductive plate. In the resonant cavity, the power transmitting coil and the power receiving coil resonate magnetically so as to supply the power of the AC voltage signal to the load.

Since the power transmitting coil and the power receiving coil are accommodated in the resonant cavity surrounded by the electrically-conductive case, power is wirelessly supplied to the load from the power source circuit at a high transmission efficiency.

Since the power transmitting LC circuit having the power transmitting coil and the power transmitting capacitor connected in parallel or in series is formed on the power transmitting circuit board, the resonance frequency $f_0$ of the power transmitting LC circuit can be easily adjusted to be identical with the resonance frequency $f_0$ of the power receiving LC circuit.

According to a second aspect of the present invention, the wireless power supply device further includes at least a pair of electrically-conductive attachment units configured to attach the power transmitting circuit board to an inner wall surface of the electrically-conductive case, and the both ends of the power transmitting LC circuit are electrically connected to the electrically-conductive case via the pair of electrically-conductive attachment units.

The both ends of the power transmitting LC circuit are electrically connected to the electrically-conductive case via at least the pair of electrically-conductive attachment units configured to attach the power transmitting circuit board to the inner wall surface of the electrically-conductive case, and the power transmitting coil of the power transmitting LC circuit resonates at the resonance frequency $f_0$ in the resonant cavity. No standing electromagnetic waves generated around the power transmitting coil by the resonance of the power transmitting coil leak out from the electrically-conductive case, and the power receiving coil magnetically resonating with the power transmitting coil in the resonant cavity resonates at the resonance frequency $f_0$. Thus, the power can be supplied to the load at a high transmission efficiency.

According to a third aspect of the present invention, the resonant cavity of the wireless power supply device is surrounded by the electrically-conductive plate and an electrically-insulating plate integrally coupled to the electrically-conductive plate, and the electrically-insulating plate is covered with an electromagnetic shield film or an electromagnetic shield coating electrically connected to the electrically-conductive plate integrally coupling to the electrically-insulating plate.

Even though a part of the resonant cavity is surrounded by the electrically-insulating plate integrally coupled to the electrically-conductive plate, the electrically-insulating plate is covered with the electromagnetic shield film or the electromagnetic shield coating electrically connected to the electrically-conductive plate. Thus, no electromagnetic waves generated by the resonance of the power transmitting coil leak out from the resonant cavity.

According to a fourth aspect of the present invention, the power transmitting coil of the wireless power supply device is formed on the power transmitting circuit board so as to be close to a voltage conversion coil connected to the power source circuit, so that electromagnetic induction coupling made between the voltage conversion coil and the power transmitting coil causes an AC voltage signal having a resonance frequency $f_0$ to

flow through the power transmitting coil.

In proportion to the number of turns of the power transmitting coil relative to that of the voltage conversion coil, the voltage of the AC voltage signal to be applied to the power transmitting coil changes, and the voltage to be supplied to the load connected to the power receiving coil magnetically resonating with the power transmitting coil also changes.

According to a fifth aspect of the present invention, the power transmitting coil of the wireless power supply device is a pattern coil formed by a conductive pattern of the power transmitting circuit board electrically connecting between the pair of electrically-conductive attachment units.

The power transmitting coil can be formed during the manufacture of the power transmitting circuit board.

A sixth aspect of the present invention provides a wireless power supply device including: a power transmitting LC circuit having a power transmitting coil and a power transmitting capacitor connected in parallel or in series; a power transmitting circuit board on which the power transmitting LC circuit is formed; a power source circuit configured to apply an AC voltage signal having a resonance frequency $f_0$ of the power transmitting LC circuit to the power transmitting LC circuit; a power receiving LC circuit having a power receiving coil and a power receiving capacitor connected in parallel or in series and having a resonance frequency $f_0$ the same as the resonance frequency $f_0$ of the power transmitting LC circuit; a load to be supplied with power of the AC voltage signal via the power receiving coil of the power receiving LC circuit; and an electrically-conductive case configured to accommodate the power transmitting circuit board and the power receiving LC circuit in a resonant cavity formed therein and surrounded by an electrically-conductive plate with both ends of the power transmitting LC circuit being connected to the electrically-conductive plate. In the resonant cavity, the power transmitting coil and the power receiving coil resonate magnetically so as to supply the power of the AC voltage signal to the load. The load is a torque sensor configured to detect a running torque of a crankshaft that rotates together with a pedal of a power-assisted bicycle. A power receiving circuit board on which the torque sensor and the power receiving LC circuit are formed is fixed to the crankshaft. The power transmitting circuit board and the power receiving circuit board are accommodated in the resonant cavity surrounded by the electrically-conductive plate of the electrically-conductive case fixed to a main body of the power-assisted bicycle.

Since the power transmitting LC circuit having the power transmitting coil and the power transmitting capacitor connected to each other is formed on the power transmitting circuit board, the resonance frequency $f_0$ of the power transmitting LC circuit can be easily adjusted to be identical with the resonance frequency $f_0$ of the power receiving LC circuit.

The power transmitting circuit board on which the power transmitting LC circuit is formed, and the power receiving circuit board on which the torque sensor and the power receiving LC circuit are formed are accommodated in the resonant cavity surrounded by the electrically-conductive plate of the electrically-conductive case fixed to the main body of the power-assisted bicycle so as to be protected from external forces.

The both ends of the power transmitting LC circuit are electrically connected to the electrically-conductive case, and the power transmitting coil of the power transmitting LC circuit resonates at the resonance frequency $f_0$ in the resonant cavity surrounded by the electrically-conductive plate. No standing electromagnetic waves generated around the power transmitting coil by the resonance of the power transmitting coil leak out from the electrically-conductive case, and the power receiving coil magnetically resonating with the power transmitting coil in the resonant cavity resonates at the resonance frequency $f_0$. Thus, the power can be supplied, at a high transmission efficiency, to the torque sensor fixed to the crankshaft that rotates together with the pedal of the power-assisted bicycle.

According to a seventh aspect of the present invention, the wireless power supply device further includes at least a pair of electrically-conductive attachment units configured to attach the power transmitting circuit board to an inner wall surface of the electrically-conductive case, and the both ends of the power transmitting LC circuit are electrically connected to the electrically-conductive case via the pair of electrically-conductive attachment units.

The both ends of the power transmitting LC circuit are electrically connected to the electrically-conductive case via at least the pair of electrically-conductive attachment units configured to attach the power transmitting circuit board to the inner wall surface of the electrically-conductive case, and the power transmitting coil resonates at the resonance frequency $f_0$ in the resonant cavity.

According to an eighth aspect of the present invention, the resonant cavity of the wireless power supply device is surrounded by the electrically-conductive plate and an electrically-insulating plate integrally coupled to the electrically-conductive plate, and the electrically-insulating plate is covered with an electromagnetic shield film or an electromagnetic shield coating electrically connected to the electrically-conductive plate integrally coupling to the electrically-insulating plate.

Even though a part of the resonant cavity is surrounded by the electrically-insulating plate integrally coupled to the electrically-conductive plate, the electrically-insulating plate is covered with the electromagnetic shield film or the electromagnetic shield coating electrically connected to the electrically-conductive plate. Thus, no electromagnetic waves generated by the resonance of the power transmitting coil leak out from the resonant cavity.

According to the first aspect of the present invention, the resonance frequency $f_0$ of the power transmitting LC circuit can be easily adjusted to be identical with the resonance frequency $f_0$ of the power receiving LC circuit.

According to the second aspect of the present invention, with the use of the pair of electrically-conductive attachment units configured to attach the power transmitting circuit board including the power transmitting LC circuit formed thereon to the inner wall surface of the electrically-conductive case, the power transmitting LC circuit can be accommodated in the resonant cavity surrounded by the electrically-conductive plate, and the both ends of the power transmitting LC circuit can be electrically connected to the electrically-conductive case.

According to the third aspect of the present invention, since no electromagnetic waves oscillated from the power transmitting coil leak out from the resonant cavity, the power can be supplied to the load at a high transmission efficiency.

Moreover, since no high-energy electromagnetic waves leak out from the electrically-conductive case, there are no noise effects on electronic circuits therearound, and little harmful effects on the human body.

According to the fourth aspect of the present invention, a power with a voltage appropriate for an operating voltage of the load can be supplied by adjusting a turn ratio between the voltage conversion coil and the power transmitting coil.

According to the fifth aspect of the present invention, the power transmitting coil of the power transmitting LC circuit can be formed during the manufacture of the power transmitting circuit board.

According to the sixth aspect of the present invention, with the use of the electrically-conductive case fixed to the main body of the power-assisted bicycle for protecting circuit components such as the torque sensor from the external forces, the resonant cavity from which no electromagnetic waves oscillated from the power transmitting coil leak out can be formed.

Since no electromagnetic waves oscillated from the power transmitting coil leak out from the resonant cavity and the power can be supplied to the torque sensor at a high transmission efficiency from a battery attached to the main body of the power-assisted bicycle, the exhaustion of the battery is decelerated. Thus, the power-assisted bicycle can be used over a prolonged period of time with a single battery charge.

According to the seventh aspect of the present invention, with the use of the pair of electrically-conductive attachment units configured to attach the power transmitting circuit board including the power transmitting LC circuit formed thereon to the inner wall surface of the electrically-conductive case, the power transmitting LC circuit can be accommodated in the resonant cavity surrounded by the electrically-conductive plate, and the both ends of the power transmitting LC circuit can be electrically connected to the electrically-conductive case.

According to the eighth aspect of the present invention, since no electromagnetic waves oscillated from the power transmitting coil leak out from the electrically-conductive case, the power can be supplied to the torque sensor at a high transmission efficiency from the battery having a limited capacity.

Moreover, since no high-energy electromagnetic waves leak out from the electrically-conductive case, there are little harmful effects on the human body riding on the power-assisted bicycle.

Brief Description of Drawings

Fig. 1 is a partial cutaway perspective view illustrating a wireless power supply device 1 according to an embodiment of the present invention.
Fig. 2 is a vertical cross-sectional view of a part cut vertically along a pair of electrically-conductive screws 4' for attaching a power transmitting circuit board 10 to an electrically-conductive case 3.
Fig. 3 is a block diagram illustrating a circuit configuration of the wireless power supply device 1.
Fig. 4 is a perspective view illustrating a main part of a related wireless power supply device 100.
Fig. 5 is a block diagram illustrating a circuit configuration of the wireless power supply device 100. Description of Embodiments

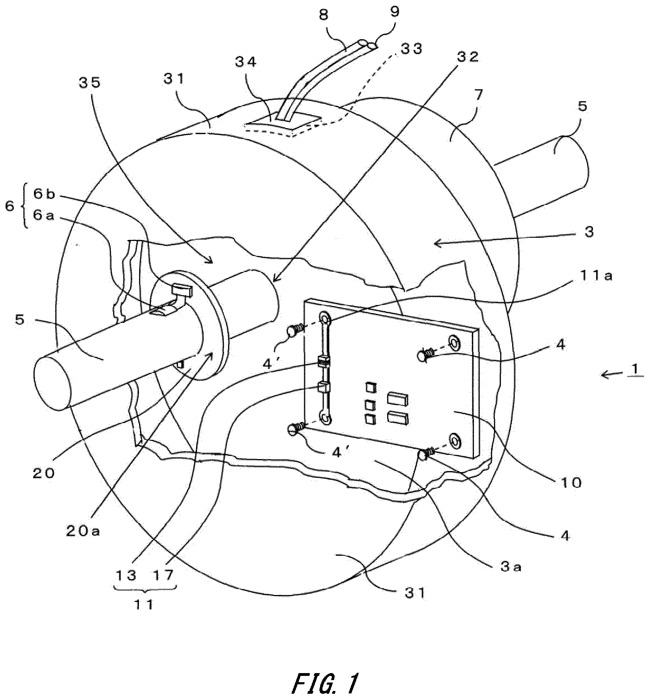

A wireless power supply device 1 according to an embodiment of the present invention will now be described with reference to Figs. 1 to 3. The wireless power supply device 1 according to the present embodiment is attached to a power-assisted bicycle to supply driving power to a torque sensor 6 from a battery (not shown) attached to a frame body of the power-assisted bicycle. The torque sensor is attached to a crankshaft 5, which rotates together with a pedal of the power-assisted bicycle, to detect a running torque of the crankshaft 5.

The crankshaft 5 is rotatably supported by being inserted through a bearing (not shown) provided in a bottom bracket 7 formed integrally with the frame body of the power-assisted bicycle. As shown in Fig. 1, an electrically-conductive case 3 is fixed along an outer side surface of the bottom bracket 7. The electrically-conductive case 3 is formed in the shape of a cylindrical box having its entire peripheral surface surrounded by an electrically-conductive metal plate 31. A lid surface (not shown) opposed to a bottom surface 3a of the box shape is pierced so as to have a through hole 32 for allowing the crankshaft 5 to be passed therethrough. One end of the crankshaft 5 projected from the bottom bracket 7 passes through the electrically-conductive case 3.

A portion of the upper part of the electrically-conductive case 3 in Fig. 1 is covered with an electrically-insulating synthetic resin plate 33. Inserted through the electrically-insulating synthetic resin plate 33 are a power cable 8 for providing a power source from the battery to circuit components mounted on a power transmitting circuit board 10 to be described later, and a signal cable 9 for outputting detection data of the torque sensor 6 to a drive control circuit (not shown) that controls the driving of an electric motor. In order to completely shield the interior of the electrically-conductive case 3, an electromagnetic shield film 34 electrically connected to the electrically-conductive metal plate 31 therearound is deposited over a front surface of the electrically-insulating synthetic resin plate 33. Although the electrically-insulating synthetic resin plate 33 may be shielded by depositing an electromagnetic shield coating on the front surface thereof, an aluminum-evaporated polyester film is used as the electromagnetic shield film 34 in the present embodiment.

As described above, since the entire peripheral surface of the electrically-conductive case 3 is surrounded by the electrically-conductive metal plate 31 and the electromagnetic shield film 34, the interior of the electrically-conductive case 3 forms a resonant cavity 35 in which a power transmitting coil 13 and a power receiving coil 22 to be described later magnetically resonate.

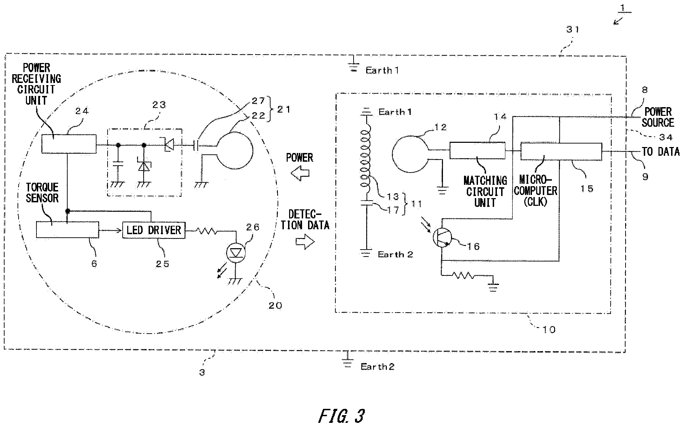

In this resonant cavity 35, the power transmitting circuit board 10 and a power receiving circuit board 20 are accommodated as shown in Fig. 3. On the power transmitting circuit board 10, a power transmitting LC circuit 11, a voltage conversion coil 12, a matching circuit unit 14, a microcomputer 15 equipped with a clock signal source, and a phototransistor 16 are formed. On the power receiving circuit board 20, a power receiving LC circuit 21, a full-wave rectifying circuit 23, a power receiving circuit unit 24, the torque sensor 6, an LED driver 25, and an infrared LED 26 to be photo-coupled with the phototransistor 16 are formed. Each circuit or circuit element being formed on a circuit board herein means that a circuit element constituting a circuit or a circuit element is mounted on a circuit board or formed by a conductive pattern on a circuit board.

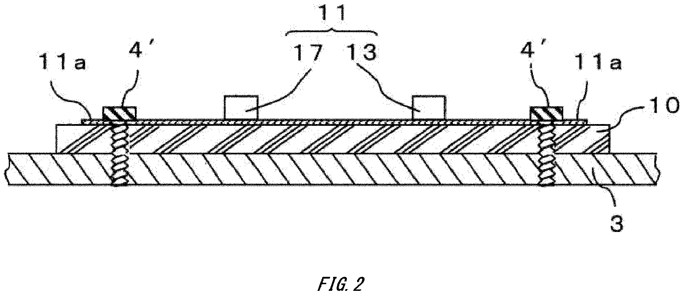

As shown in Fig. 1, the power transmitting circuit board 10 is attached by screwing electrically-conductive screws 4, which are electrically-conductive attachment units configured to attach the power transmitting circuit board 10 to the electrically-conductive case 3, into four corners of the power transmitting circuit board 10 so as to secure the power transmitting circuit board 10 to the bottom surface 3a of the electrically-conductive case 3 by screws. Of these electrically-conductive screws, a pair of electrically-conductive screws 4' are screwed at positions of land patterns 11a on both sides of the power transmitting LC circuit 11 on the power transmitting circuit board 10 as shown in Fig. 2, and both ends of the power transmitting LC circuit 11 are electrically connected to the electrically-conductive case 3 at Earth 1 and Earth 2.

The microcomputer 15, the matching circuit unit 14, and the phototransistor 16 formed on the power transmitting circuit board 10 are operated using the power source to which power is supplied by the battery via the power cable 8. The microcomputer 15 generates an AC voltage signal with the same frequency as a resonance frequency $f_0$ (which will be described later) of the power receiving LC circuit 21 on the basis of a clock outputted from the clock signal source. The microcomputer 15 then applies the generated AC voltage signal to the voltage conversion coil 12 via the matching circuit unit 14 that matches the output of the microcomputer 15 with the impedance of the voltage conversion coil 12. The microcomputer 15 is also connected to the phototransistor 16 to demodulate the detection data of the torque sensor 6 from an infrared signal received by the phototransistor 16 and output the demodulated data to the drive control circuit disposed outside the electrically-conductive case 3 via the signal cable 9.

Although the voltage conversion coil 12 may be a conductive pattern formed in a helical shape on the power transmitting circuit board 10, the voltage conversion coil 12 in the present embodiment is a chip inductor surface-mounted on a conductive pattern of the power transmitting circuit board 10.

The voltage conversion coil 12 and the power transmitting coil 13 of the power transmitting LC circuit 11 are formed on the power transmitting circuit board 10 so as to be close to, and opposed to, each other. With such an arrangement, the voltage conversion coil 12 and the power transmitting coil 13 are coupled with each other by electromagnetic induction. A ratio of a voltage generated in the power transmitting coil 13 coupled by electromagnetic induction or the power receiving coil 22 having magnetic field resonance with the power transmitting coil 13 to a voltage of the AC voltage signal applied to the voltage conversion coil 12 is proportional to the number of turns of the voltage conversion coil 12 and the power transmitting coil 13. Thus, the number of turns of the voltage conversion coil 12 and the power transmitting coil 13 is determined on the basis of an operating voltage of loads in the power receiving circuit board 20, such as the torque sensor 6 and the infrared LED 26, which are operated by receiving wireless power supply.

The power transmitting LC circuit 11 is formed by the power transmitting coil 13 and a power transmitting capacitor 17 connected in series between the land patterns 11a of the power transmitting circuit board 10. Circuit constants for the inductance of the power transmitting coil 13 and the capacitance of the power transmitting capacitor 17 are set so that a series resonance frequency $f_0$ of the power transmitting LC circuit 11 is identical with the resonance frequency $f_0$ of the power receiving LC circuit 21. As the result, the power transmitting coil 13 and the power receiving coil 22 generate magnetic field resonance inside the electrically-conductive case 3. Although the power transmitting coil 13 and the power transmitting capacitor 17 can be produced by conductive patterns formed on the power transmitting circuit board 10, the power transmitting coil 13 and the power transmitting capacitor 17 in the present embodiment are provided as discrete components mounted on the power transmitting circuit board 10 in an easily replaceable manner in order to facilitate fine tuning of the series resonance frequency $f_0$.

The inner diameter of the power receiving circuit board 20 is approximately equal to the outer diameter of the crankshaft 5. The power receiving circuit board 20 is formed in a circular plate shape perpendicular to the axial direction of the crankshaft 5, and attached around the axis of the crankshaft 5 inside the electrically-conductive case 3. The power receiving LC circuit 21 provided on the power receiving circuit board 20 is formed by the power receiving coil 22 and a power receiving capacitor 27 connected in series. Of these components, the power receiving coil 22 in the present embodiment is formed by a helical conductive pattern provided on a back surface of the power receiving circuit board 20, as opposed to a mounting surface 20a on which other circuit components such as the power receiving capacitor 27 are mounted, because the circular plate-shaped power receiving circuit board 20 attached around the crankshaft 5 has a small mounting area. The power receiving coil 22 is connected in series with the power receiving capacitor 27 provided on the mounting surface 20a via a through hole of the power receiving circuit board 20.

A series resonance frequency $f_0$ of the power receiving LC circuit 21 is represented by:

$$f_0 = 1/(2\pi\sqrt{LC}) \quad \ldots \quad (1)$$

wherein L denotes an inductance of the power receiving coil 22 in the power receiving LC circuit 21, and C denotes a capacitance of the power receiving capacitor 27.

When an AC voltage signal having the same resonance frequency $f_0$ flows through the power transmitting coil 13 to form standing electromagnetic waves having the resonance frequency $f_0$ inside the electrically-conductive case 3, the power receiving coil 22 generates magnetic field resonance. As a result of induced electromotive force of the power receiving coil 22, the AC voltage signal having the resonance frequency $f_0$ flows through the power receiving LC circuit 21.

The full-wave rectifying circuit 23 connected to the latter part of the power receiving LC circuit 21 converts the AC voltage signal to a DC voltage power and outputs the power to the power receiving circuit unit 24. On the basis of the inputted power, the power receiving circuit unit 24 provides a DC power source to the torque sensor 6 and the LED driver 25 so as to operate these circuit components.

The torque sensor 6 detects a torque being applied to the crankshaft 5 on the basis of a shearing strain generated on a surface of the crankshaft 5. As shown in Fig. 1, the torque sensor 6 includes: a strain sensor 6a fixed to the crankshaft 5; and an input and output unit 6b mounted on the mounting surface 20a of the power receiving circuit board 20 for outputting detection data of the strain sensor 6a to the LED driver 25 and receiving the driving power source from the power receiving circuit unit 24.

The LED driver 25 controls the blinking of the infrared LED 26 on the basis of the detection data inputted from the torque sensor 6, and causes an infrared signal modulated by the detection data to be outputted from the infrared LED 26. As mentioned above, the phototransistor 16 and the infrared LED 26 are photo-coupled together, so that the infrared signal emitted by the infrared LED 26 is received by the phototransistor 16. However, since the infrared light reflects at an inner wall surface of the electrically-conductive case 3, the phototransistor 16 is not necessarily required to be disposed within a directivity angle of the infrared LED 26.

In the thus configured wireless power supply device 1, the circuit components, such as the microcomputer 15, the matching circuit unit 14, and the phototransistor 16, mounted on the power transmitting circuit board 10 fixed to the frame body of the power-assisted bicycle are supplied with the power source from the battery via the power cable 8, and the AC voltage signal having the same frequency as the resonance frequency $f_0$ of the power receiving LC circuit 21 is outputted to the voltage conversion coil 12.

The resonance frequency $f_0$ of the power transmitting LC circuit 11 is identical with the resonance frequency $f_0$ of the voltage conversion coil 12. Thus, when the AC voltage signal having the resonance frequency $f_0$ flows through the voltage conversion coil 12, the power transmitting coil 13 coupled with the voltage conversion coil 12 by electromagnetic induction oscillates at the resonance frequency $f_0$, thereby forming electromagnetic waves having the resonance frequency $f_0$ around the power transmitting coil 13. Since an area around the power transmitting coil 13 is surrounded by the grounded electrically-conductive case 3 including the electrically-conductive metal plate 31 and the electromagnetic shield film 34, no electromagnetic waves formed around the power transmitting coil 13 leak out from the electrically-conductive case 3, thus forming a magnetic field of standing electromagnetic waves having the resonance frequency $f_0$ in the resonant cavity 35 inside the electrically-conductive case 3.

The power receiving LC circuit 21 formed on the power receiving circuit board 20 is disposed in the resonant cavity 35, and the power receiving coil 22 of the power receiving LC circuit 21 generates magnetic field resonance with the power transmitting coil 13 at the same resonance frequency $f_0$. Thus, power obtained by the induced electromotive force of the power receiving coil 22 can be wirelessly supplied to the circuit components, such as the torque sensor 6 and the LED driver 25, formed on the power receiving circuit board 20, which rotates relative to the frame body of the power-assisted bicycle.

Thus, the torque sensor 6 operates using the induced electromotive force generated in the power receiving coil 22 as a power source, detects a torque being applied to the crankshaft 5 on the basis of the shearing strain of the crankshaft 5, and outputs the detection data to the microcomputer 15 via the infrared signal outputted to the phototransistor 16 from the infrared LED 26. The drive control circuit connected to the microcomputer 15 via the signal cable 9 controls the driving of the electric motor in accordance with the detection data detected by the torque sensor 6.

According to the present embodiment, since the power transmitting coil 13 and the power receiving coil 22 to generate magnetic field resonance are disposed in the resonant cavity 35 inside the electrically-conductive case 3 surrounded by the electrically-conductive metal plate 31, power can be wirelessly supplied to the loads connected to the power receiving coil 22 at a high transmission efficiency. Moreover, the electrically-conductive case 3 that provides its interior as the resonant cavity 35 may be a metal case that protects the loads such as the torque sensor 6 and the circuit components for wireless power supply from external forces.

Moreover, with the use of the electrically-conductive screws 4 for attaching the power transmitting circuit board 10 to the electrically-conductive case 3, the power transmitting LC circuit 11 can be connected to the electrically-conductive case 3 grounded at the both ends thereof and can be disposed in the resonant cavity 35 inside the electrically-conductive case 3. Furthermore, since the power transmitting LC circuit 11 is formed on the power transmitting circuit board 10, the resonance frequency $f_0$ of the power transmitting LC circuit 11 can be easily adjusted by changing the circuit constants of the power transmitting coil 13 and the power transmitting capacitor 17.

In the above-described embodiment, the AC voltage signal having the resonance frequency $f_0$ flows through the power transmitting coil 13 via the voltage conversion coil 12 coupled with the power transmitting coil 13 by electromagnetic induction. If there is no need for voltage conversion, however, the AC voltage signal having the resonance frequency $f_0$ may be directly outputted across the power transmitting LC circuit 11.

The power transmitting coil 13 and the power transmitting capacitor 17 in the power transmitting LC circuit 11, and the power receiving coil 22 and the power receiving capacitor 27 in the power receiving LC circuit 21 are both connected in series. However, either one or both of these pairs may be connected in parallel as long as these circuits have the same resonance frequency $f_0$. If the AC voltage signal having the resonance frequency $f_0$ is directly outputted to the power transmitting LC circuit 11 in which the power transmitting coil 13 and the power transmitting capacitor 17 are connected in parallel using a switching element without providing the voltage conversion coil 12, however, a large current flows through the power transmitting capacitor 17 upon switching at which the polarity of the AC voltage signal changes. As the result, the power transmitting capacitor 17 fails to function as a resonant capacitor. It is therefore desirable that the power transmitting coil 13 and the power transmitting capacitor 17 in the power transmitting LC circuit 11 be connected in series.

Although a part of the electrically-conductive case 3 surrounding the resonant cavity 35 is formed by the electrically-insulating synthetic resin plate 33, the entire electrically-conductive case 3 may be formed by the electrically-conductive metal plate 31. The present invention is sufficiently applicable even when a part of the electrically-conductive case 3 is opened.

The embodiment of the present invention is suitable for a wireless power supply device for supplying power to a load operating inside an electrically-conductive case covered with an electrically-conductive plate such as a metal plate. Reference Signs List

1       wireless power supply device

3       electrically-conductive case

4'      electrically-conductive screw

6       torque sensor (load)

10      power transmitting circuit board

11      power transmitting LC circuit

13      power transmitting coil

17      power transmitting capacitor

20      power receiving circuit board

21      power receiving LC circuit

22      power receiving coil

27      power receiving capacitor

31      electrically-conductive metal plate

33      electrically-insulating synthetic resin plate

34      electromagnetic shield film

35      resonant cavity

**Claims**

1.  A wireless power supply device comprising:

    a power transmitting LC circuit having a power transmitting coil and a power transmitting capacitor connected in parallel or in series;
    a power transmitting circuit board on which the power transmitting LC circuit is formed;

a power source circuit configured to apply an AC voltage signal having a resonance frequency $f_0$ of the power transmitting LC circuit to the power transmitting LC circuit;

a power receiving LC circuit having a power receiving coil and a power receiving capacitor connected in parallel or in series and having a resonance frequency $f_0$ the same as the resonance frequency $f_0$ of the power transmitting LC circuit;

a load to be supplied with power of the AC voltage signal via the power receiving coil of the power receiving LC circuit; and

an electrically-conductive case configured to accommodate the power transmitting circuit board and the power receiving LC circuit in a resonant cavity formed therein and surrounded by an electrically-conductive plate with both ends of the power transmitting LC circuit being connected to the electrically-conductive plate, wherein in the resonant cavity, the power transmitting coil and the power receiving coil resonate magnetically so as to supply the power of the AC voltage signal to the load.

2. The wireless power supply device according to claim 1, further comprising at least a pair of electrically-conductive attachment units configured to attach the power transmitting circuit board to an inner wall surface of the electrically-conductive case, and wherein the both ends of the power transmitting LC circuit are electrically connected to the electrically-conductive case via the pair of electrically-conductive attachment units.

3. The wireless power supply device according to claim 1 or 2, wherein

the resonant cavity is surrounded by the electrically-conductive plate and an electrically-insulating plate integrally coupled to the electrically-conductive plate, and

the electrically-insulating plate is covered with any of an electromagnetic shield film and an electromagnetic shield coating electrically connected to the electrically-conductive plate integrally coupling to the electrically-insulating plate.

4. The wireless power supply device according to any one of claims 1 to 3, wherein

the power transmitting coil is formed on the power transmitting circuit board so as to be close to a voltage conversion coil connected to the power source circuit, so that electromagnetic induction coupling made between the voltage conversion coil and the power transmitting coil causes an AC voltage signal having a resonance frequency $f_0$ to flow through the power transmitting coil.

5. The wireless power supply device according to any one of claims 1 to 4, wherein the power transmitting coil is a pattern coil formed by a conductive pattern of the power transmitting circuit board electrically connecting between the pair of electrically-conductive attachment units.

6. A wireless power supply device comprising:

a power transmitting LC circuit having a power transmitting coil and a power transmitting capacitor connected in parallel or in series;

a power transmitting circuit board on which the power transmitting LC circuit is formed;

a power source circuit configured to apply an AC voltage signal having a resonance frequency $f_0$ of the power transmitting LC circuit to the power transmitting LC circuit;

a power receiving LC circuit having a power receiving coil and a power receiving capacitor connected in parallel or in series and having a resonance frequency $f_0$ the same as the resonance frequency $f_0$ of the power transmitting LC circuit;

a load to be supplied with power of the AC voltage signal via the power receiving coil of the power receiving LC circuit; and

an electrically-conductive case configured to accommodate the power transmitting circuit board and the power receiving LC circuit in a resonant cavity formed therein and surrounded by an electrically-conductive plate with both ends of the power transmitting LC circuit being connected to the electrically-conductive plate, wherein in the resonant cavity, the power transmitting coil and the power receiving coil resonate magnetically so as to supply the power of the AC voltage signal to the load,

the load is a strain sensor configured to detect a running torque of a crankshaft that rotates together with a pedal of a power-assisted bicycle,

a power receiving circuit board on which the strain sensor and the power receiving LC circuit are formed is fixed to the crankshaft, and

the power transmitting circuit board and the power receiving circuit board are accommodated in the resonant cavity surrounded by the electrically-conductive plate of the electrically-conductive case fixed to a main body of the power-assisted bicycle.

7. The wireless power supply device according to claim 6, further comprising at least a pair of electrically-conductive attachment units configured to attach the power transmitting circuit board to an inner wall surface of the electrically-conductive case, and wherein the both ends of the power transmitting LC circuit are electrically connected to the electrically-conductive case via the pair of electrically-conductive attachment units.

8. The wireless power supply device according to claim 6 or 7, wherein
   the resonant cavity is surrounded by the electrically-conductive plate and an electrically-insulating plate integrally coupled to the electrically-conductive plate, and
   the electrically-insulating plate is covered with any of an electromagnetic shield film and an electromagnetic shield coating electrically connected to the electrically-conductive plate integrally coupling to the electrically-insulating plate.

*FIG. 1*

*FIG. 2*

*FIG. 3*

100

120

111

102

121

110

101

101a

(RELATED ART)

*FIG. 4*

120  126  121 (103)                                           110

REQ

127 ⟋  DRIVER

124 ⟋

CLK

123 ⟋  CLK GENERATING UNIT

DATA  DEMODUL- ATION CIRCUIT

122  125 (103)

POWER  112 ⎫ 104
       114 ⎭

DATA

LOAD MODULATION CIRCUIT

113

100

115

POWER SOURCE CIRCUIT

STRAIN SENSOR UNIT

111

SCLK GENERATING UNIT

REQ DETECTION UNIT

(RELATED ART)

*FIG. 5*

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/327444 A1 (ICHIKAWA KATSUEI [JP] ET AL) 10 November 2016 (2016-11-10) * abstract * * paragraphs [0031] - [0040], [0064], [0065]; figures 4,9 * ----- | 1-8 | INV. H02J50/12 B62M6/50 G01L3/10 H01F38/18 H02J50/50 |

TECHNICAL FIELDS
SEARCHED        (IPC)

H02J
B62M
G01L
H01F

The present search report has been drawn up for all claims

| Place of search | Date of completion of the search | Examiner |
|---|---|---|
| Munich | 2 June 2021 | Jäschke, Holger |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 21 2406

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2021

| Patent document cited in search report | Publication date | Patent family member(s) | Publication date |
|---|---|---|---|
| US 2016327444 A1 | 10-11-2016 | CN 105793152 A | 20-07-2016 |
| | | EP 3104495 A1 | 14-12-2016 |
| | | HU E041536 T2 | 28-05-2019 |
| | | JP 6129992 B2 | 17-05-2017 |
| | | JP WO2015108152 A1 | 23-03-2017 |
| | | US 2016327444 A1 | 10-11-2016 |
| | | WO 2015108152 A1 | 23-07-2015 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6129992 B

- US 20180097402